# EUROPEAN PATENT SPECIFICATION

(11) **EP 4 303 646 B1**
(45) Date of publication and mention of the grant of the patent: **04.11.2026**
(21) Application number: 22763437.5
(22) Date of filing: 04.03.2022
(51) Int. Cl.: G02F 1/13, G02F 1/1334, G02F 1/1339

(54) **LIGHT CONTROL SHEET AND LIGHT CONTROL DEVICE**
LICHTSTEUERUNGSFOLIE UND LICHTSTEUERUNGSVORRICHTUNG
FEUILLE DE COMMANDE DE LUMIÈRE ET DISPOSITIF DE COMMANDE DE LUMIÈRE

(30) Priority: 05.03.2021 JP 2021035329
(43) Date of publication of application: 10.01.2024
(73) Proprietor: TOPPAN INC., Tokyo 110-0016 (JP)
(72) Inventor: TAKAHASHI, Yusuke, Tokyo 110-0016 (JP)
(74) Representative: TBK
(86) International application number: PCT/JP2022/009499
(87) International publication number: WO 2022/186387

(56) References cited:
- WO-A1-2017/175796
- JP-A- 2000 258 758
- JP-A- 2017 097 339
- JP-A- 2019 090 951
- JP-A- 2020 109 441
- JP-A- 2021 009 188
- JP-A- H08 110 524
- US-A1- 2020 012 138

## Description

### [Technical Field]

The present disclosure relates to a light control sheet and a light control device which have a variable cloudiness.

### [Background Art]

A light control sheet includes: a light control layer that contains a liquid crystal composition; and a pair of transparent electrode layers that sandwich the light control layer (for example, see PTL 1). A light control device includes the above-described light control sheet and a driving unit that controls a drive voltage applied to the pair of transparent electrode layers. Depending on a potential difference between the pair of transparent electrode layers, the orientation state of liquid crystal molecules varies, and thus the light transmittance of the light control sheet varies. The light control sheet may be adhered to, for example, a building material such as a window glass and a glass wall or a window glass of an automobile to serve as a partitioning member for partitioning into two spaces.

### [Citation List]

### [Patent Literature]

[PTL 1] JP 2017-187775 A
Further prior art documents are JP 2021 009188 A showing a light control sheet and light control apparatus, JP H08 110524 A showing an optical switch element and its production and US 2020/012138 A1 showing a light control laminate and resin spacer for light control laminates.

### [Summary of the Invention]

### [Technical Problem]

For example, when the light control sheet also serves as decoration for a space, like a shoji screen door with shoji paper attached having a pattern such as blurred appearance and shading, the application range as a partitioning member can be significantly expanded. However, the above-described light control sheet only expresses either a state that is colorless and transparent over the entire sheet or a state that exhibits a plain white opaque appearance caused by light scattering, depending on the intensity of a drive voltage. Therefore, there is a strong demand for enhancing the designability of the light control sheet.

### [Solution to Problem]

A light control sheet to solve the above-described problem is defined by claim 1.

A light control device to solve the above-described problem is defined by claim 4.

When the absolute value of the change ratio in the haze of the light control sheet is 0.5%/V or more, the haze of visible light corresponds to a middle tone that is between a transparent mode and an opaque mode. According to the above-described configuration, thicknesses of the light control layer measured in a plurality of measurement positions are within a range of 0.8 times or more and 1.2 times or less the median value of the thicknesses, and thus the variance in the middle value between first voltage Va as the lower limit value of the drive voltage corresponding to the middle tone and second voltage Vb as the upper limit value is suppressed to 40% or less. When the variance in the middle value is reduced, the variance in haze can be reduced when a certain drive voltage around the middle value is applied to be put to the middle tone mode. As a result, aesthetic appearance of the light control sheet in the middle tone mode can be enhanced. Also, according to the above-described configuration, the variance in haze of the light control sheet can be suppressed without lowering the response speed required for switching the mode, when the light control layer has a structure in which liquid crystal molecules are contained in a plurality of voids. This enables practical use of a light control sheet having a middle tone mode in which aesthetic appearance and practicality are maintained. Therefore, designability of a light control sheet can be enhanced by adding the middle tone mode as one of the drive modes.

In the above-described light control sheet, the light control layer contains spacers that control a gap between a pair of the transparent electrode layers. The ratio of the total area occupied by a plurality of the spacers to the entire area of the light control layer when the light control layer is observed from the contact surface with the transparent electrode layer may be 0.9% or more and 30.0% or less.

According to the above-described configuration, the occupied area ratio, which is the ratio of the area occupied by the plurality of spacers, is 0.9% or more and 30.0% or less, and thus a gap between the transparent electrode layers can be controlled to reduce the variance in thickness of the light control layer, and a haze derived from the spacers in the transparent mode can be reduced.

In the above-described light control sheet, the diameter of the voids is 0.4 µm or more and 2.2 µm or less.

According to the above-described configuration, the diameter of the voids is 0.4 µm or more and 2.2 µm or less, and thus the oriented particles are likely to be oriented along an electric field in the voids of the resin layer. This facilitates control of the haze. Also, no translucency occurs in the opaque mode, and good light scattering properties in the visible light range can be obtained.

In the above-described light control sheet, a difference between the first voltage Va and the second voltage Vb may be 22 V or less.

According to the above-described configuration, an appropriate response speed required for transition between the transparent mode and the opaque mode can be obtained. Also, power consumption required for transition between the transparent mode and the opaque mode can be reduced.

### [Advantageous Effects of the Invention]

According to the present disclosure, designability of a light control sheet and a light control device that includes the light control sheet can be enhanced.

### [Brief Description of the Drawings]

Fig. 1 is a cross-sectional view illustrating a normal-type light control sheet.
Fig. 2 is a plan view illustrating a light control sheet in an opaque mode.
Fig. 3 is a plan view illustrating a light control sheet in a transparent mode.
Fig. 4 is a plan view illustrating a light control sheet in a middle tone mode.
Fig. 5 is a cross-sectional view illustrating a light control sheet in an opaque mode.
Fig. 6 is a cross-sectional view illustrating a light control sheet in a transparent mode.
Fig. 7 is a plan view illustrating a light control sheet of Reference Example exhibiting a middle tone.
Fig. 8 is a graph illustrating voltage-haze curves of a known light control sheet.
Fig. 9 is a graph illustrating a voltage-haze curve of a light control sheet in the embodiment.
Fig. 10 is a graph illustrating a voltage-haze curve of a light control sheet of Reference Example.
Fig. 11 is a cross-sectional view illustrating a reverse-type light control sheet.
Fig. 12 is a table illustrating evaluation results of Examples 1 to 4 and Comparative Examples 1 and 2.
Fig. 13 is a graph illustrating a voltage-haze curve of a light control sheet according to Example 1.
Fig. 14 is a graph illustrating a voltage-haze curve of a light control sheet according to Example 2.
Fig. 15 is a graph illustrating a voltage-haze curve of a light control sheet according to Example 3.
Fig. 16 is a graph illustrating a voltage-haze curve of a light control sheet according to Example 4.
Fig. 17 is a graph illustrating a voltage-haze curve of a light control sheet according to Comparative Example 1.
Fig. 18 is a graph illustrating a voltage-haze curve of a light control sheet according to Comparative Example 2.
Fig. 19 is an electron microscope photograph illustrating a light control layer of a light control sheet according to Example 1.
Fig. 20 is an electron microscope photograph illustrating a light control layer of a light control sheet according to Example 2.
Fig. 21 is an electron microscope photograph illustrating a light control layer of a light control sheet according to Example 3.
Fig. 22 is an electron microscope photograph illustrating a light control layer of a light control sheet according to Example 4.
Fig. 23 is an electron microscope photograph illustrating a light control layer of a light control sheet according to Comparative Example 1.
Fig. 24 is an electron microscope photograph illustrating a light control layer of a light control sheet according to Comparative Example 2.

### [Description of the Embodiments]

An embodiment of the light control sheet and the light control device will be described with reference to the drawings.

### [Fundamental structure of light control device]

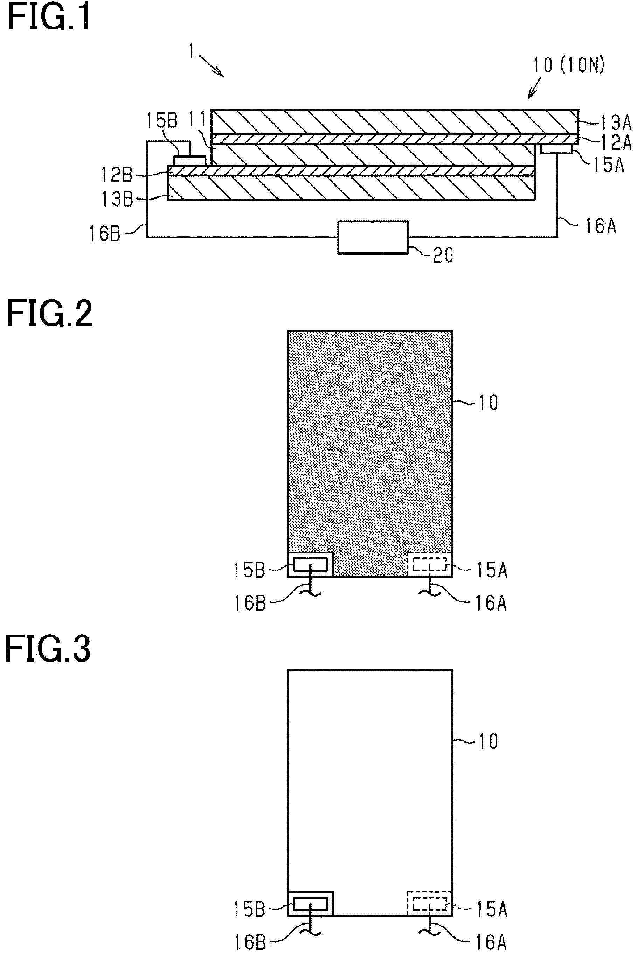

The fundamental structure of the light control sheet and the light control device will be described with reference to Fig. 1.

As illustrated in Fig. 1, a light control device 1 includes a light control sheet 10 and a driving unit 20 that controls a drive voltage applied to the light control sheet 10. The light control sheet 10 may have a normal-type structure in which the linear transmittance to visible light is high during energization and low during non-energization. The light control sheet 10 may have a reverse-type structure in which the linear transmittance is low during energization and high during non-energization.

In the present embodiment, a normal-type light control sheet 10N will be mainly described. It is noted that configuration that is common between the normal-type and the reverse-type will be merely described as the light control sheet 10.

The normal-type light control sheet 10N includes a light control layer 11, a first transparent electrode layer 12A and a second transparent electrode layer 12B which are a pair of transparent electrode layers, and a first transparent support layer 13A and a second transparent support layer 13B which are a pair of transparent support layers. The first transparent electrode layer 12A and the second transparent electrode layer 12B sandwich the light control layer 11. The first transparent support layer 13A and the second transparent support layer 13B sandwich the light control layer 11, the first transparent electrode layer 12A, and the second transparent electrode layer 12B. The light control layer 11 is positioned between the first transparent electrode layer 12A and the second transparent electrode layer 12B. The light control layer 11 is in contact with the first transparent electrode layer 12A and the second transparent electrode layer 12B. The first transparent support layer 13A supports the first transparent electrode layer 12A. The second transparent support layer 13B supports the second transparent electrode layer 12B.

The surface of the first transparent electrode layer 12A is connected to a first terminal unit 15A. The first terminal unit 15A is connected to the driving unit 20 via a wiring 16A. The surface of the second transparent electrode layer 12B is connected to a second terminal unit 15B. The second terminal unit 15B is connected to the driving unit 20 via a wiring 16B. The first terminal unit 15A is disposed to a region in the end portion of the light control sheet 10N where the first transparent electrode layer 12A is exposed. The second terminal unit 15B is disposed to a region in the end portion of the light control sheet 10N where the second transparent electrode layer 12B is exposed. The first terminal unit 15A and the second terminal unit 15B constitute a part of the light control sheet 10N.

The driving unit 20 applies a drive voltage to between the first transparent electrode layer 12A and the second transparent electrode layer 12B. The intensity of the drive voltage is variable and controlled by the driving unit 20.

The light control layer 11 contains a transparent resin layer and a liquid crystal composition. The light control layer 11 contains a polymer dispersed liquid crystal (PDLC), a polymer network liquid crystal (PNLC), or a nematic curvilinear aligned phase (NCAP).

In the light control layer 11 that contains polymer dispersed liquid crystals, independent multiple voids or voids having a shape that is joined with a part of an independent shape are included in the resin layer, and the liquid crystal composition is retained in the voids. Polymer network liquid crystals have a three-dimensional mesh-like polymer network and retain liquid crystal molecules as oriented particles in voids contained in the polymer network. A nematic curvilinear aligned phase layer retains an encapsulated liquid crystal composition in the resin layer. The light control layer 11 of the present embodiment contains polymer dispersed liquid crystals.

Examples of the liquid crystal molecules as oriented particles are any one or two or more of those based on Schiff base, azo, azoxy, biphenyl, terphenyl, benzoic acid ester, tolan, pyrimidine, cyclohexanecarboxylic acid ester, phenylcyclohexane, and dioxane types. The liquid crystal molecules contained in the light control layer 11 have, for example, positive dielectric anisotropy and a dielectric constant higher in their major axis direction than in their minor axis direction.

The first transparent electrode layer 12A and the second transparent electrode layer 12B each have transmission properties that allow visible light to pass through. An example of materials for forming the first transparent electrode layer 12A and the second transparent electrode layer 12B may be any one selected from the group consisting of indium tin oxide (ITO), fluorine-doped tin oxide (FTO), tin oxide, zinc oxide, carbon nanotube (CNT), and poly(3,4-ethylenedioxythiophene) (PEDOT).

The first transparent support layer 13A and the second transparent support layer 13B allow visible light to pass therethrough. The first transparent support layer 13A and the second transparent support layer 13B may be a synthetic resin or an inorganic compound. Examples of the synthetic resin include polyester, polyacrylate, polycarbonate, and polyolefin. Examples of the polyester include polyethylene terephthalate (PET) and polyethylene naphthalate. An example of the polyacrylate is polymethyl methacrylate. Examples of the inorganic compound include silicon dioxide, silicon oxynitride, and silicon nitride.

The first terminal unit 15A and the second terminal unit 15B are, for example, a flexible printed circuit (FPC). The FPC includes a support layer, a conductor, and a protective layer. The conductor is sandwiched between the support layer and the protective layer. The support layer and the protective layer are formed of an insulating synthetic resin. The support layer and the protective layer may be formed of, for example, polyimide. The conductor is formed of, for example, a metal thin film. A material for forming the metal thin film may be, for example, copper. The first terminal unit 15A and the second terminal unit 15B are not limited to an FPC and may be, for example, a metal tape.

The first terminal unit 15A and the second terminal unit 15B are respectively bonded to the first transparent electrode layer 12A and the second transparent electrode layer 12B through an unillustrated conductive adhesive layer. In a portion of each of the first terminal unit 15A and the second terminal unit 15B to which the conductive adhesive layer is bonded, the conductor is exposed from the protective layer or the support layer. The conductive adhesive layer may be formed of, for example, an anisotropic conductive film (ACF), an anisotropic conductive paste (ACP), an isotropic conductive film (ICF), and an isotropic conductive paste (ICP). From the viewpoint of handling properties in the production process of the light control device 1, the conductive adhesive layer is preferably an anisotropic conductive film.

The wirings 16A and 16B are formed of, for example, a metal wire and an insulating layer covering the metal wire. The wire is formed of, for example, copper.

The driving unit 20 applies a drive voltage to between the first transparent electrode layer 12A and the second transparent electrode layer 12B. The drive voltage may be an AC voltage having a rectangular wave shape. The drive voltage may be an AC voltage having a sinusoidal wave shape. The drive voltage may be a DC voltage.

The light control layer 11 changes the orientation of liquid crystal molecules in response to a change in voltage between the first transparent electrode layer 12A and the second transparent electrode layer 12B. The change in the orientation of liquid crystal molecules changes the scattering degree, absorption degree, and transmission degree of visible light incident on the light control layer 11.

### [Light control sheet]

With reference to Fig. 2 to Fig. 6, the structure of the normal-type light control sheet 10N will be described together with drive modes of the light control device 1. The light control device 1 has three drive modes: transparent mode, opaque mode, and middle tone mode. In the light control sheet 10N of the present embodiment, the opaque mode is an example of the first mode, the transparent mode is an example of the second mode, and the middle tone mode is an example of the third mode.

Fig. 2 is a view illustrating the light control sheet 10N in the opaque mode. The opaque mode is a mode in which the haze as the cloudiness of visible light of the light control sheet 10N is largest within the fluctuation range of the haze of the light control sheet 10N. In the opaque mode, no drive voltage is applied between the first transparent electrode layer 12A and the second transparent electrode layer 12B.

Fig. 3 is a view illustrating the light control sheet 10N in the transparent mode. The transparent mode is a mode in which the haze of the light control sheet 10N is smallest within the fluctuation range of the haze of the light control sheet 10N. In the transparent mode, a drive voltage having a predetermined intensity is applied between the first transparent electrode layer 12A and the second transparent electrode layer 12B.

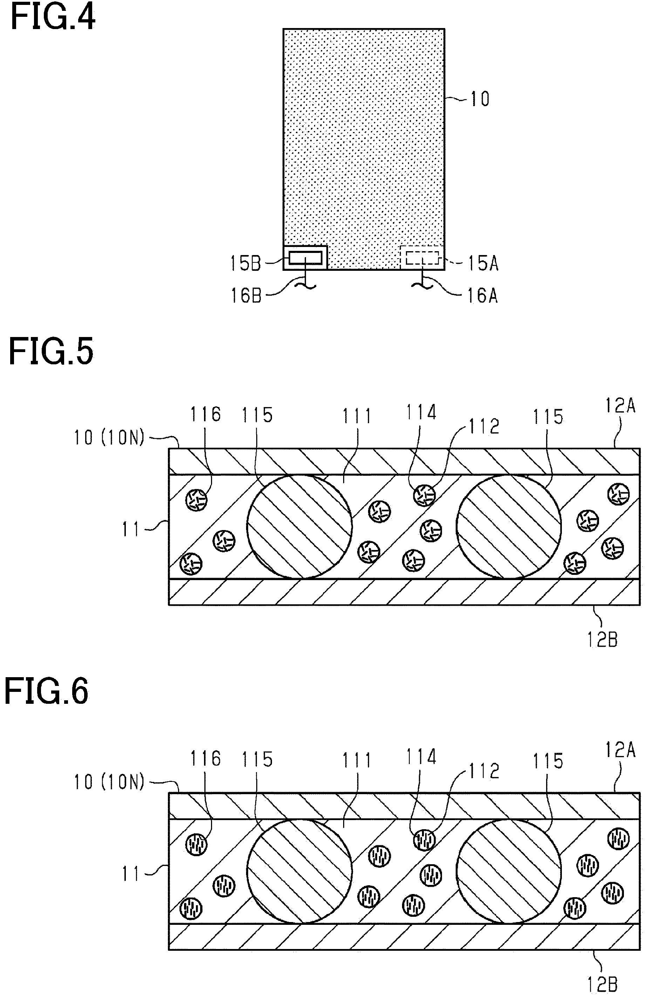

Fig. 4 is a view illustrating the light control sheet 10N in the middle tone mode. The middle tone mode is a drive mode in which a haze between the haze of visible light in the opaque mode and the haze in the transparent mode is allowed to be expressed in the light control sheet 10N. The middle tone mode is a drive mode in which the light control sheet 10N is made semi-transmissive and semi-scattering. The haze in the middle tone is adjustable depending on uses and others. In the middle tone mode, a voltage smaller than the drive voltage applied in the transparent mode is applied between the first transparent electrode layer 12A and the second transparent electrode layer 12B.

With reference to Fig. 5 and Fig. 6, the light control layer 11 will be described in detail. Fig. 5 is a view schematically illustrating the cross-sectional structure of the light control sheet 10N in the opaque mode. Illustration of the first transparent support layer 13A and the second transparent support layer 13B is omitted. The light control layer 11 includes, in addition to a resin layer 111 and a liquid crystal composition 112, a plurality of spacers 115. The spacers 115 are positioned between the first transparent electrode layer 12A and the second transparent electrode layer 12B. The spacers 115 are not particularly limited as long as they have a shape that enables control of a gap between the first transparent electrode layer 12A and the second transparent electrode layer 12B. For example, the spacers 115 contain resin as a main component and have a spherical or columnar shape. The spacers 115 allow visible light to pass therethrough.

The resin layer 111 and the liquid crystal composition 112 are positioned in a space between the first transparent electrode layer 12A and the second transparent electrode layer 12B and fill a space around the spacers 115 dispersed in the space. The resin layer 111 has multiple voids 116. The voids 116 may have an independent shape or a shape in which a part of an independent shape in one of the voids 116 is joined with another of the voids 116. The liquid crystal composition 112 fills the voids 116. The liquid crystal composition 112 contains liquid crystal molecules 114.

When the drive mode of the light control sheet 10N is the opaque mode, the major axis of the liquid crystal molecules 114 extends along a direction that is outside the normal direction of the first transparent electrode layer 12A, for example, in an irregular direction. Therefore, visible light incident on the light control layer 11 is scattered by a difference between the refractive index of the liquid crystal composition 112 in the voids 116 and the refractive index of the resin layer 111. Also, the linear transmittance decreases compared to that of the light control sheet 10N in the transparent mode, and transparency is lowered.

Fig. 6 is a view illustrating the light control sheet 10N driven in the transparent mode when a drive voltage for the transparent mode is applied between the first transparent electrode layer 12A and the second transparent electrode layer 12B. The major axis of the liquid crystal molecules 114 is oriented so as to be parallel or substantially parallel to the normal direction of the first transparent electrode layer 12A. Accordingly, scattering of light incident on the light control layer 11 decreases. Also, the haze decreases compared to that of the light control sheet 10N in the opaque mode, and transparency increases.

In the light control sheet 10N driven in the middle tone mode, the major axis of the liquid crystal molecules 114 intersects the normal direction of the first transparent electrode layer 12A. Accordingly, scattering of incident light is large compared to in the light control sheet 10N in the transparent mode and is small compared to in the light control sheet 10N in the opaque mode.

The thickness of each layer constituting the light control sheet 10N illustrated in Fig. 1 and Figs. 5 and 6 and the thickness ratio to another layer are presented for descriptive purposes and are different from an actual thickness of each layer and thickness ratio to another layer. The thickness of the first transparent support layer 13A and the thickness of the second transparent support layer 13B are, for example, 50 µm or more and 250 µm or less. The thickness of the first transparent electrode layer 12A and the thickness of the second transparent electrode layer 12B are, for example, 5 nm or more and 100 nm or less. When the thickness of the first transparent electrode layer 12A and the thickness of the second transparent electrode layer 12B are 5 nm or more and 100 nm or less, the drive of the light control sheet 10N can be stabilized, and cracking occurring in the transparent electrode layers can be reduced. The thickness of the light control layer 11 is, for example, 2 µm or more and less than 30 µm. If phase separation between the resin layer 111 and the liquid crystal composition 112 is required to easily proceed in the formation of the light control layer 11, the thickness of the light control layer 11 is preferably 30 µm or less.

The light control sheet 10 is attached to, for example, a window of a mobile object such as a vehicle or an aircraft. Further, the light control sheet 10 is attached to, for example, windows of various buildings such as a house, a station, and an airport, partitions installed in offices, display windows installed in stores, and screens on which images are projected. The shape of the light control sheet 10 is not particularly limited as long as it corresponds to an object to which it is to be attached and may be planar or curved. When the light control sheet 10 is attached to these objects and controlled to the middle tone mode, an observer can visually recognize the existence of an object positioned opposite the observer position with the light control sheet 10 sandwiched therebetween, but cannot clearly see the object.

### [Method of producing light control sheet]

An example of the method of producing the light control sheet 10N will be described. There are prepared a sheet that includes the first transparent support layer 13A having on its surface the first transparent electrode layer 12A and a sheet that includes the second transparent support layer 13B having on its surface the second transparent electrode layer 12B. The first transparent electrode layer 12A and the second transparent electrode layer 12B are formed by a known thin film formation method such as sputtering, vacuum deposition, and coating.

Next, a liquid body that contains the spacers 115 including as a main raw material divinylbenzene and others and a dispersion medium in which the spacers 115 are dispersed is applied on at least one of the first transparent electrode layer 12A and the second transparent electrode layer 12B. Furthermore, the sheet to which the liquid body has been applied is heated to remove the dispersion medium.

A coating material as a precursor of the light control layer 11 is prepared. The coating material contains a polymerizable composition and a liquid crystal composition. Then, the coating agent is applied on at least one of the first transparent electrode layer 12A and the second transparent electrode layer 12B on which the spacers 115 were dispersed thereby to form a precursor layer. Next, the pair of sheets is bonded such that the precursor layer are sandwiched between the first transparent electrode layer 12A and the second transparent electrode layer 12B. The precursor layer is formed by a known coating method such as an ink jet method, a gravure coating method, a spin coating method, a slit coating method, a bar coating method, a flexo coating method, a die coating method, a dip coating method, and a roll coating method.

Subsequently, light having a wavelength that allows the polymerization reaction of the polymerizable composition to proceed, such as ultraviolet light, is emitted onto a laminate including the precursor layer, the first transparent electrode layer 12A, the second transparent electrode layer 12B, the first transparent support layer 13A, and the second transparent support layer 13B. Accordingly, monomers and oligomers contained in the polymerizable composition of the precursor layer are polymerized. Also, phase separation between the resin layer 111 and the liquid crystal composition 112 proceeds. Then, the light control layer 11 retaining liquid crystal molecules in the voids 116 is formed.

The laminate is formed, for example, in a large-sized sheet shape by utilizing a roll-to-roll technique. A part of the laminate is cut out into a desired shape that corresponds to an object to be attached with the light control sheet 10N. Then, the first terminal unit 15A and the second terminal unit 15B are formed to the cut-out sheet as a part of the laminate, and thus the light control sheet 10N is formed.

### [Middle tone]

Next, bringing a light control sheet 100 of a Reference Example into the middle tone will be described. In the Reference Example, the light control sheet 100 is of the normal-type. The drive voltage applied to the light control sheet 100 of the Reference Example is higher than the drive voltage applied in the opaque mode and lower than the drive voltage applied in the transparent mode. Accordingly, it is possible to drive the light control sheet 100 into a middle tone that is in the middle between transparency and opaqueness. However, merely adjusting the drive voltage is not enough to obtain aesthetic appearance of the light control sheet 100 of Reference Example when the light control sheet 100 is driven into the middle tone.

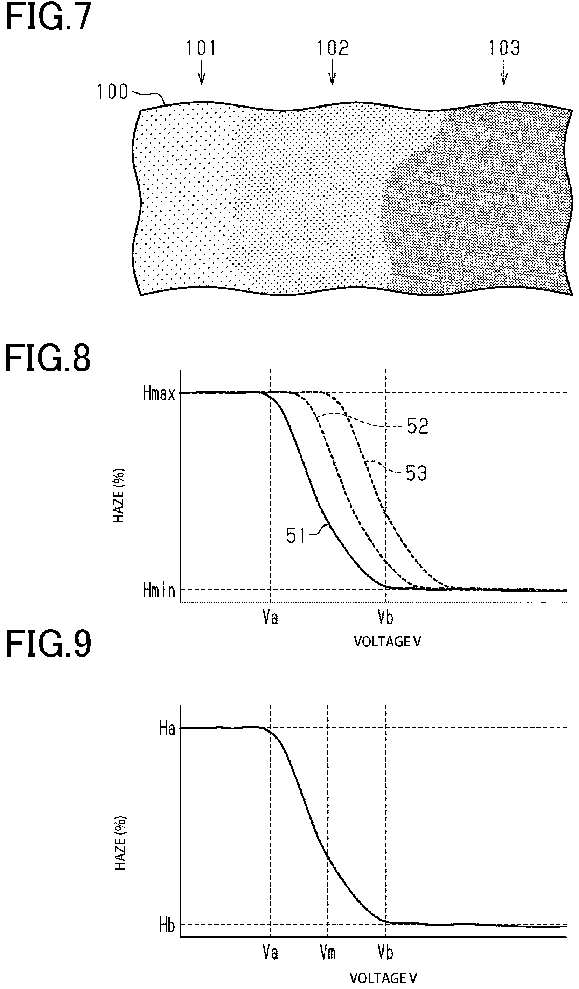

Fig. 7 is a view schematically illustrating a part of the light control sheet 100 of Reference Example driven into the middle tone. Occurrence of a variance in haze is observed in the light control sheet 100. This light control sheet 100 includes a region 101 having a low haze and a high linear transmittance, a region 103 having a high haze and a low linear transmittance, and a region 102 having a haze that is between the regions 101 and 103. When the variance in haze is large in the plane of the light control sheet 100 in this manner, the haze differs between a part of the light control sheet 100 and another part adjacent to that part. As a result, a part of the light control sheet 100 appears mottled, and thus aesthetic appearance of the light control sheet 100 deteriorates. In addition, if the light control sheet 100 driven into the middle tone becomes partly transparent, the function as the middle tone may not be sufficiently exerted. It is noted that the example illustrated in Fig. 7 schematically illustrates the light control sheet exhibiting a mottled appearance. The haze in the light control sheet 100 driven into the middle tone is divided to a degree that one light control sheet 100 is visually recognized as having three or more separate regions or divided such that regions having hazes different from one another exhibit an irregular shape or a geometric shape other than a stripe shape.

Fig. 8 is a graph illustrating V-H curves that indicate a change in haze relative to a drive voltage applied to the light control sheet 100 of Reference Example. V-H curves 51 to 53 indicate V-H curves in three measurement positions different from one another in one light control sheet 100. In the opaque mode, the haze converges to maximum value Hmax. In the transparent mode, the haze converges to minimum value Hmin. In the middle tone mode in which the haze is between maximum value Hmax and minimum value Hmin, the variance in haze in a plurality of measurement positions different from one another sometimes increases when a drive voltage enabling the middle tone to be exhibited is applied to the light control sheet 100. This is because a change ratio ΔH/V in haze per 1 V, when a drive voltage enabling the middle tone to be exhibited is applied to the light control sheet 100, is large compared to in the opaque mode and in the transparent mode. When change ratio ΔH/V is large, a middle haze can be achieved, but a difference in an electric field formed in the plane of the light control sheet 100 becomes apparent as a difference in haze.

Next, characteristics of the light control sheet 10N in the present embodiment will be described.

### (Variance in haze)

The magnitude of the variance in haze of the light control sheet 10N in the middle tone can be expressed by a variance in the drive voltage in the middle tone mode calculated according to the following procedure.
- In three or more measurement positions in the plane of the light control sheet 10N, a haze was measured in the measurement positions while changing the drive voltage, and a V-H curve for each measurement position is acquired.
- For the V-H curve in each measurement position, a voltage range between the drive voltage bringing the light control sheet 10N into the opaque state and the drive voltage bringing into the transparent state is identified. That is, the voltage range in which the absolute value of the change ratio per "1V" in haze is 0.5(%/V) or more in the V-H curve is identified for the V-H curve in each measurement position. This voltage range is the range of the drive voltage enabling the middle tone to be exhibited in the light control sheet 10N in the measurement position where the voltage range is identified.
- As exemplified in Fig. 9, the lower limit value in the voltage range exhibiting the middle tone is defined as "first voltage Va", the upper limit value is defined as "second voltage Vb", and the middle value {(Va + Vb)/2} therebetween is defined as "middle value Vm". Then, first voltage Va, second voltage Vb, and middle value Vm are obtained for each measurement position. This middle value Vm is a drive voltage that brings the haze of the light control sheet 10N into about the middle between maximum value Ha and minimum value Hb.
- When the number of measurement positions is "n (□3)", middle values Vm (Vm1, Vm2, ...Vmn) are obtained for measurement positions P (P1, P2, ...Pn). From the obtained middle values Vm, "minimum value Vmin" and "maximum value Vmax" as well as average value "Vavr" of middle values Vm are obtained. The percentage of a value obtained by dividing a difference between maximum value Vmax and minimum value Vmin by average value Vavr according to equation (1) below is defined as variance Vmv in middle value Vm.
$Vmv \left(%\right) = \left\{\left(Vmax-Vmin\right)/Vavr\right\} \times 100$ (1)

Variance Vmv in middle value Vm of the light control sheet 10N obtained as described above is 40% or less. When variance Vmv in middle value Vm exceeds 40%, a variance in haze becomes visible to the human eye.

### (Thickness of light control layer)

The thicknesses of the light control layer 11 measured in a plurality of measurement positions in the light control layer 11 are within a range that is 0.8 times or more and 1.2 times or less the median value of the thicknesses in the plurality of measurement positions. In other words, a difference between the thickness of the light control layer 11 measured in each measurement position and the median value is within a range that is "-20%" or more and "+20%" or less of the median value. The present inventors found that the variance in haze of the light control sheet 10N is derived from the variance in thickness of the light control layer 11. Variance Vmv in middle value Vm can be reduced by reducing the variance in thickness of the light control layer 11. The number of measurement positions, in an A4 size of 210 mm × 297 mm, is 3 or more and preferably 10 or more. The median value is a value that is positioned in the center when the thicknesses of the light control layer 11 in the measurement positions are listed in ascending order. When the thickness of the light control layer 11 is outside the above-described range, the variance in haze as exemplified in Fig. 7, for example, occurs.

### (Spacer-occupied area)

When the light control layer 11 is observed as a two-dimensional surface through the first transparent electrode layer 12A or the second transparent electrode layer 12B, the area occupied by the spacers 115 in the observed entire surface is preferably 0.9% or more and 30.0% or less. The occupied area of the spacers 115 can be calculated by observing a predetermined range of the light control layer 11 through an optical microscope. The predetermined range to be observed is, for example, a range of 1 mm × 1 mm. Since the refractive index of the spacers 115 differs from the refractive index of the resin layer 111, the spacers 115 exhibit a white color compared to a region in which there are no spacers 115, and distinguishing spacers from the region in which there are no spacers 115 is possible. Therefore, the area occupancy ratio of the spacers 115 can be calculated by dividing the occupied area of the spacers 115, which is a sum of areas of the plurality of spacers 115 in the observation of the above-described predetermined range, by the area of the above-described predetermined range. When the area occupancy ratio of the spacers 115 is less than 0.9%, a gap between the first transparent electrode layer 12A and the second transparent electrode layer 12B cannot be appropriately controlled, which increases the variance in thickness of the light control layer 11. When the area occupancy ratio of the spacers 115 exceeds 30.0%, the proportion of the spacers 115 in the light control layer 11 is excessively large, which decreases transparency of the light control sheet 10N in the transparent state. Also, when the area occupancy ratio of the spacers 115 is 15.0% or less, transparency when the light control sheet 10N is driven in the transparent state can be further enhanced.

### (Mode-switching voltage)

The phenomenon that variance in haze of the light control sheet 10N occurs becomes significant when, in the V-H curve, the curve is steep in a range of equal to or more than the first voltage Va, which brings the haze to the maximum value Ha, and equal to or less than the second voltage Vb, which brings the haze to the minimum value Hb. When the slope of the V-H curve is gradual, the change in haze per unit voltage is small even if a variance in haze occurs among positions different from one another in the plane of the sheet, and thus the variance in haze is unlikely to be determined from its appearance.

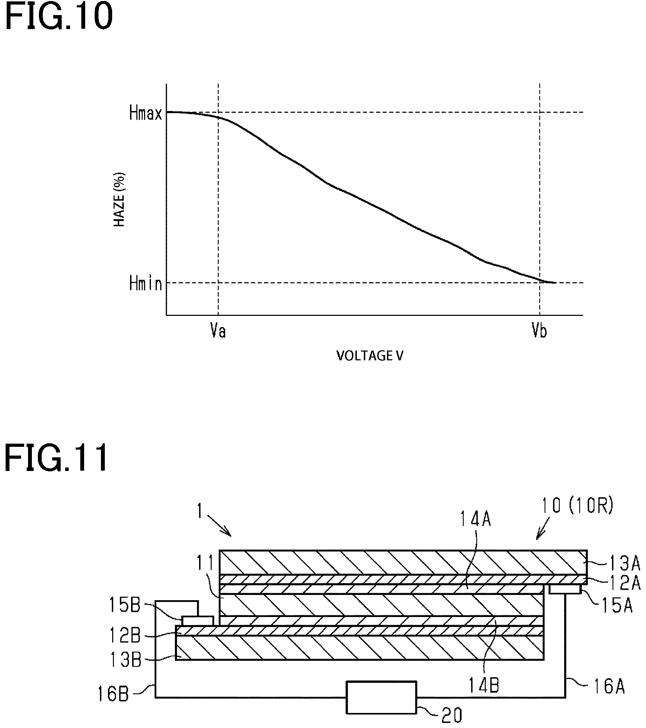

Fig. 10 is a graph illustrating a V-H curve in which the slope of a curve in a haze range of less than maximum value Ha and more than minimum value Hb is gradual. In this case, the response speed required for reversible switching between the opaque mode and the transparent mode is decreased, and the response time required for switching is lengthened. Therefore, when it is required to enhance the responsivity of switching, a voltage difference for reversibly switching between the opaque mode and the transparent mode is preferably 22V or less when the light control sheet 10N is a so-called A4 size of 210 mm × 297 mm.

When in the light control sheet 10N constituted by polymer dispersed liquid crystals, the independent multiple voids 116 or the voids 116 having a shape joined with a part of another independent shape are not contained in an appropriate state in the resin layer constituting the light control layer 11, a difference between first voltage Va and second voltage Vb does not become 22V or less, and the response speed decreases. For achieving good light scattering properties in the visible light range, the voids 116 have a diameter, as a maximum inner diameter, of 0.4 µm or more and 2.2 µm or less, and that a large number of the voids 116 are disposed in the resin layer 111. When the diameter of the voids 116 is 0.4 µm or more, translucency is suppressed, and a sufficient haze can be obtained in the opaque mode. Also, when the diameter of the voids 116 is 2.2 µm or more, the proportion of the resin layer in the light control layer 11 is prevented from being excessively small, and thus the strength of the light control layer 11 is prevented from being insufficient. When the multiple voids 116 are contained in an appropriate state in the light control layer 11, and at least the thickness of the light control layer 11 and variance Vmv in middle value Vm of the light control sheet 10N satisfy the above-described conditions, the light control sheet 10 having an appropriate response speed can be obtained while suppressing a variance in haze in the middle tone.

According to the present embodiment, the advantageous effects listed below can be achieved.
(1) The state of the light control sheet 10N in which the absolute value of the change ratio in haze per unit voltage of the light control sheet 10N is 0.5%/V or more can achieve a haze in the middle between the haze in the transparent mode and the haze in the opaque mode. According to the present embodiment, the thicknesses of the light control layer 11 measured in the plurality of measurement positions are within a range of 0.8 times or more and 1.2 times or less the median value of the thicknesses, and thus the variance in middle value Vm between first voltage Va as the lower limit value of the drive voltage corresponding to the middle tone and second voltage Vb as the upper limit value is suppressed to 40% or less. When the variance in the middle value is reduced, the variance in haze of the light control sheet 10N can be reduced when a certain drive voltage around the middle value is applied to the light control sheet 10N to be put to the middle tone. As a result, the variance in haze becomes invisible to the human eye in the middle tone, which can enhance the aesthetic appearance of the light control sheet 10N when put to the middle tone mode. Also, according to the above-described embodiment, the variance in haze of the light control sheet 10N can be suppressed without lowering the response speed required for switching the mode, when the light control layer 11 has a structure in which the liquid crystal molecules 114 are contained in the plurality of voids116. This enables practical use of a light control sheet having a middle tone mode in which aesthetic appearance and practicality are maintained. Therefore, designability of the light control sheet 10N can be enhanced by adding the middle tone mode as one of the drive modes.
(2) When the light control layer 11 has a structure in which the liquid crystal molecules 114 are contained in the plurality of voids 116, occurrence of variance in haze in the middle tone can be suppressed without excessively decreasing the response speed required for switching between the opaque mode and the transparent mode.
(3) Since the area occupancy ratio, which is the ratio of the total area occupied by the spacers 115, is 0.9% or more and 30.0% or less, a gap between the first transparent electrode layer 12A and the second transparent electrode layer 12B can be controlled to reduce the variance in thickness of the light control layer 11, and the haze derived from the spacers 115 in the transparent mode can be reduced to enhance transparency.
(4) The diameter of the voids 116 contained in the resin layer 111 constituting the light control layer 11 is 0.4 µm or more and 2.2 µm or less. Thus, the liquid crystal molecules 114 are likely to be oriented along an electric field in the voids 116 of the resin layer 111. This facilitates control of the haze of the light control sheet 10. Also, no translucency occurs in the opaque mode, and good light scattering properties in the visible light range can be obtained.
(5) Since the difference between first voltage Va as the lower limit value of the drive voltage which brings the change ratio in haze to 0.5%/V and second voltage Vb as the upper limit value is 22 V or less, an appropriate response speed required for transition between the transparent state and the opaque state can be obtained. Also, power consumption required for transition between the transparent state and the opaque state can be reduced.

### [Modification Examples]

The above-described embodiment can be implemented with modifications as described below. Also, the below-described modification examples and the above-described embodiment may be implemented in combination.
- In the above-described embodiment, the light control sheet 10 was set to be the normal-type light control sheet 10N. Instead, the light control sheet 10 may be set to be a reverse-type light control sheet 10R.

Fig. 11 is a view illustrating the reverse-type light control sheet 10R. The reverse-type light control sheet 10R includes, in addition to the light control layer 11, the first transparent electrode layer 12A, the second transparent electrode layer 12B, the first transparent support layer 13A, and the second transparent support layer 13B, a first orientation layer 14A and a second orientation layer 14B as a pair of orientation layers that sandwich the light control layer 11. The first orientation layer 14A is positioned between the light control layer 11 and the first transparent electrode layer 12A, and the second orientation layer 14B is positioned between the light control layer 11 and the second transparent electrode layer 12B. When the first transparent electrode layer 12A and the second transparent electrode layer 12B are equipotential, the first orientation layer 14A and the second orientation layer 14B orient the liquid crystal molecules 114 contained in the light control layer 11 such that the major axis direction of the liquid crystal molecules 114 extends along the normal direction of the first orientation layer 14A and the second orientation layer 14B. On the other hand, when a potential difference occurs between the first transparent electrode layer 12A and the second transparent electrode layer 12B, the first orientation layer 14A and the second orientation layer 14B orient the liquid crystal molecules 114 contained in the light control layer 11 such that the major axis direction of the liquid crystal molecules 114 is in a direction outside the normal direction. For example, the major axis direction of the liquid crystal molecules 114 is made irregular or aligned parallel to the substrate. Materials for forming the first orientation layer 14A and the second orientation layer 14B are, for example, polyesters such as polyamide, polyimide, polycarbonate, polystyrene, polysiloxane, polyethylene terephthalate, and polyethylene naphthalate, and polyacrylates such as polymethylmethacrylate. Also, usable liquid crystal molecules have negative dielectric anisotropy and a dielectric constant smaller in their major axis direction than in their minor axis direction. In this light control sheet 10R, the transparent mode is an example of the first mode, the opaque mode is an example of the second mode, and the middle tone mode is an example of the third mode. Conditions such as variance Vmv in middle value Vm of the light control sheet 10R, the thickness of the light control layer 11, the spacer-occupied area, and the mode-switching voltage are the same between in the reverse-type light control sheet 10R and in the light control sheet 10N of the above-described embodiment.
- In the above-described embodiment, the light control sheet 10N includes the light control layer 11 that contains the spacers 115. Instead, the normal-type light control sheet 10N and the reverse-type light control sheet 10R may be configured to include the light control layer 11 that does not contain the spacers 115, as long as the variance in thickness of the light control layer 11 is in a range of 0.8 times or more and 1.2 times or less the median value of the thicknesses.
- In the above-described embodiment, the light control layer 11 had a structure in which the resin layer 111 and the liquid crystal composition 112 are included. Instead, the light control sheet 10 may utilize the suspended particle device (SPD) technique with light-adjusting particles as oriented particles. The SPD technique is a technique of dispersing, in a resin matrix, a light-adjusting suspension that contains light-adjusting particles. Variance Vmv in middle value Vm of the light control sheet 10, the thickness of the light control layer 11, the spacer-occupied area, and the mode-switching voltage are the same between in the light control sheet of the SPD technique and in the above-described embodiment.

### [Examples]

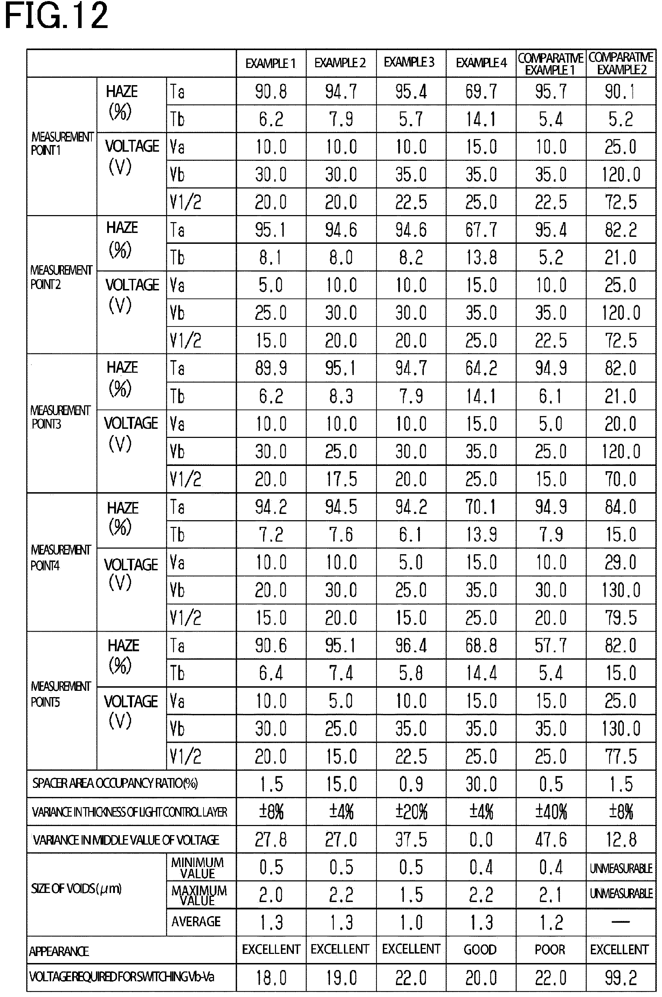

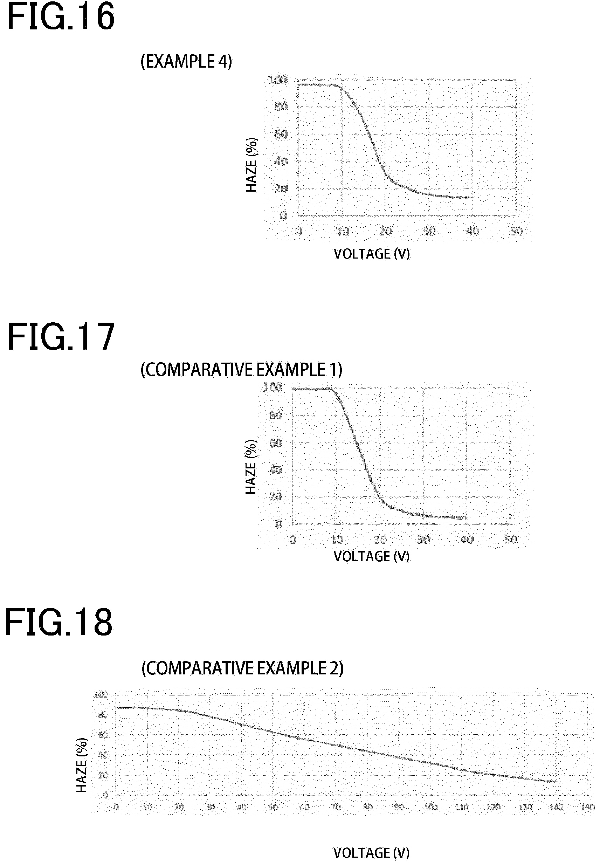

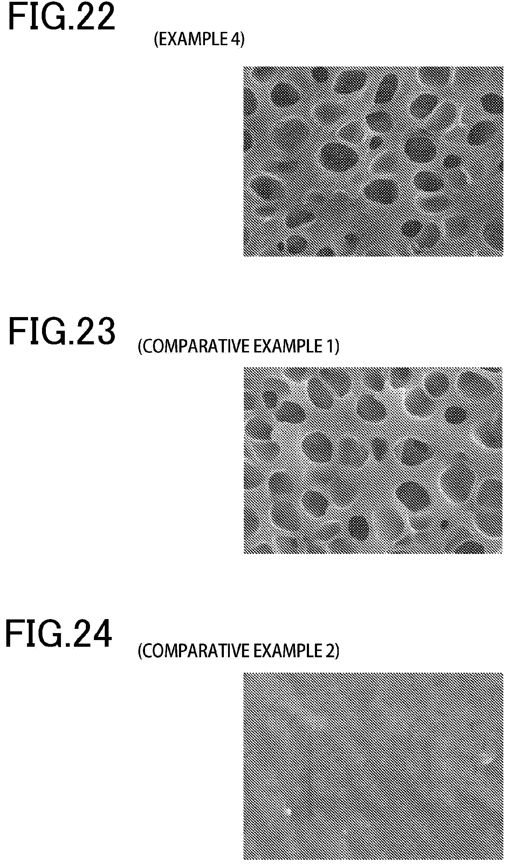

With reference to Fig. 12 to Fig. 24, examples of the above-described embodiment will be specifically described. These examples do not limit the present invention.

### [Example 1]

A pair of PET substrates each having an ITO film formed thereon was prepared. The thickness of the ITO film was 30 nm, and the thickness of the PET substrate was 125 µm. Next, a dispersion liquid, in which spacers having a diameter of 25 µm and containing divinylbenzene as a main material were dispersed in an alcohol-based solvent, was prepared. This dispersion liquid was applied on the PET substrate having an ITO film disposed thereto and heated at 100°C by an oven to remove the solvent. The occupied area ratio of the spacers was obtained by observing a range of 1 mm × 1 mm in an optional position of the light control sheet through an optical microscope. The ratio of a visually recognized white region to the observed range was calculated as an area occupancy ratio of spacers. A range of 1 mm × 1 mm in another position of the light control sheet was also observed in the same way, and an area occupancy ratio was obtained for each of five observed ranges in total. Then, an average of the area occupancy ratio was obtained. The spacer-occupied area of Example 1 was 1.50%.

The transparent electrode layer sprayed with the spacers was coated with a polymer-dispersed liquid crystal paint (KN-F-001-01-00, manufacture by Kyushu Nanotec Optical Co., Ltd.). Thereafter, UV irradiation was performed under nitrogen atmosphere for an irradiation time of 30 seconds by cutting out wavelengths of 350 nm or less, with a high-pressure mercury lamp having an illuminance of 20 mW/cm². During the UV irradiation, the temperature in the irradiation apparatus was controlled to 25°C. To the sheet including the light control layer formed thereto in this manner, the other ITO film-attached PET substrate was laminated, and these were bonded under pressure to obtain a light control sheet.

Next, the light control sheet 10 was cut into a rectangular shape having a width of 210 mm and a length of 297 mm. Also, a notch was made at the end that is a short side of one surface of the light control sheet 10, and the PET substrate as one of the transparent support layers and the transparent electrode layer supported by the PET substrate were peeled over 25 mm in the width direction and 3 mm in the length direction from the light control sheet using a metal plate. Furthermore, a portion of the light control layer 11 exposed by the peeling of the PET substrate and the transparent electrode layer was removed from the light control sheet 10 with a solvent such as isopropyl alcohol, ethyl acetate, or toluene so that the other of the transparent electrode layers was exposed. Accordingly, a first terminal unit was formed to the light control sheet 10. On the other surface of the light control sheet 10, the same process was performed to a site on the short side on which the first terminal unit was formed and away from the site where the first terminal unit was formed in the extending direction of the short side, so that one of the transparent electrode layers was exposed. Accordingly, a second terminal unit was formed to the light control sheet 10.

### [Example 2]

A light control sheet of Example 2 was prepared by spraying spacers such that the area occupancy ratio of the spacers became 15.0% and in the same manner as in Example 1 except for the area occupancy ratio of the spacers.

### [Example 3]

A light control sheet of Example 3 was prepared by spraying spacers such that the area occupancy ratio of the spacers became 0.9% and in the same manner as in Example 1 except for the area occupancy ratio of the spacers.

### [Example 4]

A light control sheet of Example 4 was prepared by spraying spacers such that the area occupancy ratio of the spacers became 30.0% and in the same manner as in Example 1 except for the area occupancy of the spacers.

### [Comparative Example 1]

A light control sheet of Comparative Example 1 was prepared by spraying spacers such that the area occupancy ratio of the spacers became 0.45% and in the same manner as in Example 1 except for the area occupancy ratio of the spacers.

### [Comparative Example 2]

A transparent electrode layer sprayed with spacers was coated with a polymer-dispersed liquid crystal paint, in the same manner as in Example 1, and thereafter, the temperature in the irradiation apparatus was controlled to 45°C during UV irradiation. Then, a light control sheet of Comparative Example 2 was prepared in the same manner as in Example 1 except for the temperature during UV irradiation.

### [Evaluation of light control sheet]

Fig. 12 is a table illustrating results of evaluation performed on the following items for Examples 1 to 4 and Comparative Examples 1 and 2.

### (Variance in haze)

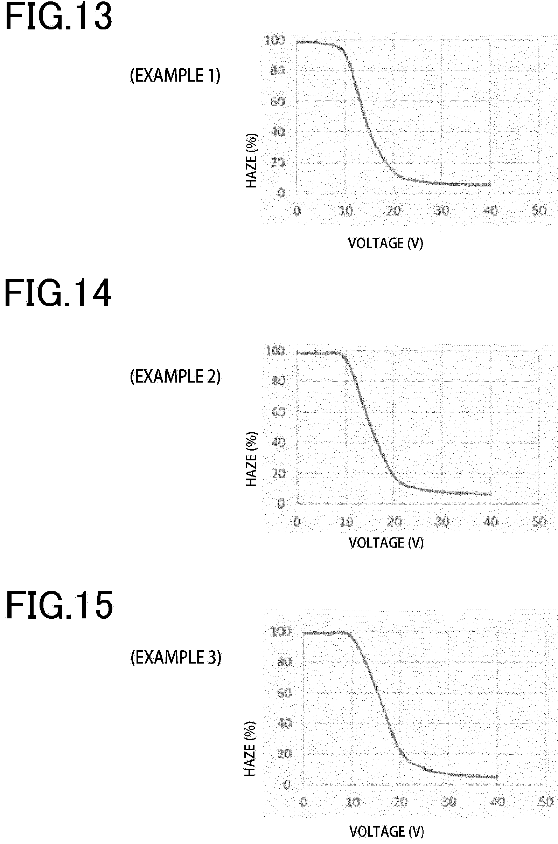

For each of the light control sheets of Examples 1 to 4 and Comparative Examples 1 and 2, the haze was measured in five measurement positions. The first terminal unit and the second terminal unit, which are a portion of the transparent electrode layer exposed by the peeling of the PET substrate and the transparent electrode layer, were connected to an AC power source device (manufactured by Kikusui Electronics, PCR-3000WE), and the voltage between the transparent electrode layers was increased until the haze was saturated from 0 V at a frequency of 60 Hz. Also, for one measurement position, the haze was measured using a haze meter (NDH-7000SP manufactured by Suga Test Instruments Co., Ltd.) every time the voltage was increased by 5 V. Furthermore, the relationship between the drive voltage and the haze was graphically illustrated to obtain a V-H curve. Fig. 13 to Fig. 18 are views illustrating an example of a V-H curve at one measurement position.

For each of other measurement positions in the plane of the light control sheet, a V-H curve was obtained by the same procedure as the above-described procedure.

Of the five measurement positions, two locations are positioned 30 mm away from one short side where the first terminal unit and the second terminal unit are disposed toward the other short side and individually 30 mm away from one long side and 30 mm away from the other side. The other two locations are positioned 30 mm away from a short side where the first terminal unit and the second terminal unit are not disposed toward a short side where the first terminal unit and the second terminal unit are disposed and individually 30 mm away from one long side and 30 mm away from the other long side. The remaining one location is positioned in the center portion when the light control sheet is viewed from the front. That is, in the rectangular light control sheet 10 having a width of 210 mm and a length of 297 mm, the five measurement positions are four corners 30 mm away from the edges of the light control sheet 10 and the center portion of the light control sheet 10. The measurement positions of the linear transmittance are arranged such that the variance in the linear transmittance of the entirety of the light control sheet 10N is expressed.

For the V-H curve obtained in each of the measurement positions, a range in which the absolute value of the change ratio of the haze is 0.5 (%/V) or more was identified. Furthermore, the lower limit value in the identified voltage range was defined as a "first voltage Va", the upper limit value was defined as a "second voltage Vb", and the middle value {(Va + Vb)/2} thereof was defined as a "middle value Vm". Also, among the middle values Vm obtained for measurement positions different from one another in one light control sheet, "minimum value Vmin", "maximum value Vmax", and average value "Vavr" of middle values Vm were obtained. Then, a value obtained by dividing a difference between the maximum value Vmax and minimum value Vmin by average value Vavr according to equation (1) described above was defined as the variance Vmv in middle value Vm.

### (Thickness of light control layer)

The cross section of the light control sheet was observed through a scanning electron microscope to measure the entire thickness as the thickness of the entire light control sheet. Also, the cross section of the light control sheet was observed through a scanning electron microscope to measure the thickness of the transparent support layer with the transparent electrode layer, i.e., the support layer thickness as the sum of the thickness of the PET substrate and the thickness of the transparent electrode layer. The support layer thickness was subtracted from the overall thickness to obtain the thickness of the light control layer. For each of ten locations different from one another on the front of the light control sheet 10N, the overall thickness and the support layer thickness were measured to obtain the thickness of the light control layer at each measurement position. The measurement positions for the thickness of the light control layer are arranged such that in the same manner as the measurement positions for the haze, the variance in thickness in the entirety containing the edge portions and the center portion of the light control sheet 10N is expressed. Also, the median value, minimum value, and maximum value of the thicknesses of the light control layer in the ten locations were obtained. Furthermore, the absolute value of a difference between the minimum value and the median value as well as the proportion of the absolute value of a difference between the median value and the maximum value to the median value were obtained.

### (Visual appearance)

The drive voltage applied to the light control sheet was changed, and the state of the middle tone was visually observed. "Excellent" or "Good" was assigned to a state in which the visual haze is uniform, and "Poor" was assigned to a state in which the haze is non-uniform and spotted. It is noted that "Good" was assigned when transparency in the transparent mode is practically sufficient, and "Excellent" was assigned when transparency in the transparent mode is even high.

### (Mode-switching voltage)

For each of the above-described five measurement positions, a voltage (Vb - Va) from first voltage Va to second voltage Vb was obtained as a voltage required for switching between the opaque mode and the transparent mode. Furthermore, the average value of voltages (Vb - Va) in the five measurement positions was obtained. Since power consumed during reversible switching between the opaque mode and the transparent mode depends on voltage, the lower the voltage (Vb - Va) required for switching, the lower the power consumption. It is noted that when the voltage (Vb - Va) is large, the response speed during switching from the opaque mode to the transparent mode is low, and time is taken until switching is completed.

### (Size of voids)

The cross section of the light control layer was observed through a scanning electron microscope to obtain the size of the voids. For obtaining the size of the voids, the liquid crystal composition that contains liquid crystal molecules was firstly removed from the light control layer. From each of the light control sheets of Examples 1 to 4 and Comparative Examples 1 and 2, a square test piece with sides each having a length of 10 cm was cut out. Then, each test piece was immersed in isopropyl alcohol thereby to remove the liquid crystal composition from the light control layer. It is noted that the liquid crystal composition can be removed from the test piece by immersing the test piece in an organic solvent in which the liquid crystal composition can be dissolved and in which the resin layer cannot be dissolved.

Then, the cross section of the test piece from which the liquid crystal composition had been removed was photographed using a scanning electron microscope. In photographing, 30 rectangular regions were optionally set on the cross section of the test piece. Then, an image of each of the regions was obtained at a magnification of 1000x using a scanning electron microscope. The 30 rectangular regions were set such that a distance between neighboring rectangular regions was 1 mm or more.

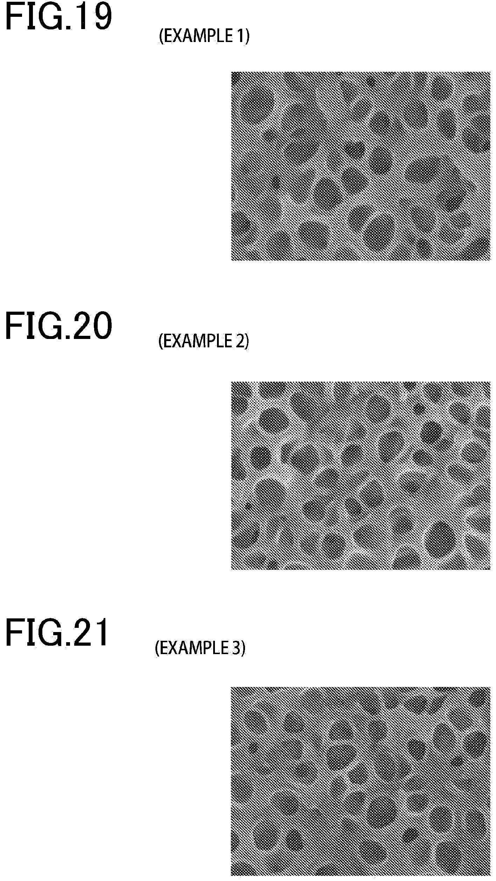

Fig. 19 to Fig. 23 are electron microscope photographs of Examples 1 to 4 and Comparative Examples 1 and 2. In each image, ten voids were optionally selected, and the size of each void was measured. The maximum value and the minimum value in the size of the ten voids were set as a maximum value and a minimum value in the size of the voids on the image. The maximum value and the minimum value in the size of the voids were calculated in each image. The maximum value among the maximum values obtained in the images at the 30 locations was defined as the maximum value in the size of the voids in the test piece. Also, the minimum value among the minimum values obtained in the images at the 30 locations was defined as the minimum value in the size of the voids in the test piece.

It is noted that for a circular void among the voids contained in the image, the diameter of the void was defined as the size of the void. Also, for an oval void among the voids contained in the image, the major axis of the void was defined as the size of the void. Also, for an irregular void among the voids contained in the image, the diameter of a circumscribed circle of the void was defined as the size of the void.

### [Evaluation Results]

### (Variance in thickness of light control layer)

For the light control sheets of Examples 1 to 4 and Comparative Example 2, the variance in thickness of the light control layer among the measurement positions were in a range in which the absolute value of a difference from the median value was within 20%. On the other hand, in Comparative Example 1 in which the occupied area ratio of the spacers was lower than the suitable range, the absolute value of a difference between the thickness of the light control layer in each measurement position and the median value was up to 40%, demonstrating a large variance.

### (Variance in haze)

It was demonstrated that in each of the light control sheets of Examples 1 to 4 and Comparative Example 2, the variance Vmv in middle value Vm between first voltage Va enabling the haze to converge to maximum value Ha and second voltage Vb enabling the haze to converge to minimum value Hb was 40% or less. On the other hand, it was demonstrated that in the light control sheet of Comparative Example 1 in which the occupied area ratio of the spacers was lower than the suitable range, and the variance in thickness of the light control layer exceeded the suitable range, variance Vmv in middle value Vm was as large as 47.6%.

### (Visual appearance)

In Examples 1 to 4 and Comparative Example 2, "Excellent" or "Good" was assigned. In Example 4 in which the occupied area ratio of the spacers exceeded the suitable range, "Good" was assigned because cloudiness somewhat occurred with insufficient transparency in the transparent mode. It was demonstrated that minimum value Hb in haze in Example 4 was 14.4%, which was higher than in Examples 1 to 3.

### (Size of voids)

In Examples 1 to 4 and Comparative Example 1, the average of the sizes of the voids was 1.0 µm to 1.3 µm. Among Examples 1 to 4 and Comparative Example 1, the shape of and distance between the voids were similar. On the other hand, no voids were observed in Comparative Example 2.

### (Mode-switching voltage)

In Examples 1 to 4 and Comparative Example 1, the mode-switching voltage was 18.0 V to 22.0 V. In Comparative Example 2, the mode-switching voltage was 99.2 V, demonstrating high power consumption.

It was demonstrated that when the variance in thickness of the light control layer is small, such as when the absolute value of a difference between the thickness of the light control layer and the median value in each measurement position is 20% or less as described above, the variance in haze in the middle tone is suppressed to 40% or less. It was also demonstrated that in the light control sheet including the light control layer in which a plurality of voids having a size of 0.4 µm or more and 2.2 µm or less and a size average value of 1.0 µm or more and 1.3 µm or less are formed, the variance in haze is small, power consumption is low, and the response speed is increased. It is noted that the effects demonstrated in the above-described examples are effects obtained when the distribution of middle values Vm is identified. Therefore, the above-described effects can be similarly obtained, in the same manner as in the polymer dispersed light control sheet, in the polymer network light control sheet in which the linear transmittance changes depending on an electric field formed in the light control sheet, when the distribution of middle values Vm is identified. Also, the effects demonstrated in the above-described examples are effects obtained when the size of the voids in the light control layer is identified. Therefore, the above-described effects can be similarly obtained in the polymer network light control sheet in which liquid crystal molecules respond to an electric field inside voids formed in the light control sheet, when the size of the voids is identified.

### [Reference Signs List]

1... Light control device
10...Light control sheet
11... Light control layer
12A,12B ... Transparent electrode layer
13A,13B... Transparent support layer
20...Driving unit
111...Resin layer
114...Liquid crystal molecules as oriented particles
116...Voids

## Claims

1. A light control sheet (10) comprising:
a light control layer (11) that contains a resin layer (111) and oriented particles;
a pair of transparent electrode layers (12a, 12b) that sandwich the light control layer; and
a pair of transparent support layers (13a, 13b) that sandwich the light control layer and a pair of the transparent electrode layers, wherein the light control layer has a structure in which the oriented particles are contained in a plurality of voids (116) dispersed in the resin layer and contains polymer dispersed liquid crystals, or polymer network liquid crystals, or nematic curvilinear aligned phases as orientation particles,
**characterized in that**
thicknesses of the light control layer measured in a plurality of measurement positions are within a range of 0.8 times or more and 1.2 times or less a median value of the thicknesses,
wherein
in a characteristic curve obtained by measuring a change in haze when a drive voltage applied to the transparent electrode layers is changed, a first voltage Va is a lower limit of the drive voltage in a range in which an absolute value of a change ratio in the haze is 0.5%/V or more, a second voltage Vb is an upper limit of the drive voltage, and Vm is a middle value between the first voltage Va and the second voltage Vb, and
a variance {(Vmax - Vmin)/Vavr} x 100 in the middle value is 40% or less, the variance being obtained by dividing a difference between a minimum value Vmin and a maximum value Vmax, among the middle values Vm obtained from the characteristic curves in the plurality of measurement positions, by an average value Vavr of the middle values Vm,
a diameter of the void is 0.4 µm or more and 2.2 µm or less.

2. The light control sheet according to claim 1, wherein
the light control layer contains spacers that control a gap between a pair of the transparent electrode layers, and
a ratio of a total area occupied by a plurality of the spacers to an overall area of the light control layer when the light control layer is observed from a contact surface with the transparent electrode layer is 0.9% or more and 30.0% or less.

3. The light control sheet according to any one of claims 1 to 2,
wherein a difference between the first voltage Va and the second voltage Vb is 22 V or less.

4. A light control device (1), comprising:
a light control sheet (10) according to any of claims 1 to 3; and
a driving unit (20) that controls a drive voltage applied to the light control sheet,
the driving unit
switching among a first mode of not applying the drive voltage, a second mode of applying a voltage of equal to or more than the second voltage Vb, and a third mode of applying a voltage between the first voltage Va and the second voltage Vb such that the haze of the light control sheet becomes the haze between the haze in the first mode and the haze in the second mode.

## Patentansprüche

1. Lichtsteuerungsplatte (10) umfassend:
eine Lichtsteuerungsschicht (11), die eine Harzschicht (111) und Orientierungsteilchen enthält;
ein Paar von transparenten Elektrodenschichten (12a, 12b), die die Lichtsteuerungsschicht sandwichartig umschließen; und
ein Paar von transparenten Stützschichten (13a, 13b), die die Lichtsteuerungsschicht und ein Paar von transparenten Elektrodenschichten sandwichartig umschließen, wobei die Lichtsteuerungsschicht eine Struktur hat, in der die Orientierungsteilchen in einer Vielzahl von Löchern (116), die in der Harzschicht dispergiert sind, enthalten sind, und als Orientierungsteilchen polymer-dispergierte Flüssigkristalle oder Polymernetzwerk-Flüssigkristalle oder nematische kurvilinear ausgerichtete Phasen enthält,
**dadurch gekennzeichnet, dass**
Dicken der Lichtsteuerungsschicht, die an einer Vielzahl von Messpositionen gemessen werden, innerhalb eines Bereichs von 0,8-mal oder mehr und 1,2-mal oder weniger als ein Medianwert der Dicken sind,
wobei
in einer charakteristischen Kurve, die durch Messen einer Trübungsänderung erhalten wird, wenn eine Treiberspannung, die an die transparenten Elektrodenschichten angelegt wird, geändert wird, eine erste Spannung Va eine untere Grenze der Treiberspannung in einem Bereich, in dem ein Absolutwert eines Änderungsverhältnisses in der Trübung 0,5%/V oder mehr ist, eine zweite Spannung Vb eine obere Grenze der Treiberspannung ist, und Vm ein Mittelwert zwischen der ersten Spannung Va und der zweiten Spannung Vb ist,
eine Varianz {(Vmax - Vmin)/Vavr} x 100 in dem Mittelwert 40 % oder weniger ist, wobei die Varianz durch Teilen einer Differenz zwischen einem Minimumwert Vmin und einem Maximumwert Vmax der Mittelwerte Vm, die von den charakteristischen Kurven an der Vielzahl von Messpositionen erhalten werden, durch einen Durchschnittswert Vavr der Mittelwerte Vm erhalten wird,
ein Durchmesser des Loches 0,4 µm oder größer und 2,2 µm oder kleiner ist.

2. Lichtsteuerungsplatte nach Anspruch 1, wobei
die Lichtsteuerungsschicht Abstandshalter enthält, die eine Lücke zwischen einem Paar der transparenten Elektrodenschichten steuern, und
ein Verhältnis einer gesamten Fläche, die durch eine Vielzahl der Abstandshalter besetzt wird, zu einer gesamten Fläche der Lichtsteuerungsschicht, wenn die Lichtsteuerungsschicht von einer Kontaktoberfläche mit der transparenten Elektrodenschicht beobachtet wird, 0,9 % oder größer und 30,0 % oder kleiner ist.

3. Lichtsteuerungsplatte nach einem der Ansprüche 1 bis 2,
wobei eine Differenz zwischen der ersten Spannung Va und der zweiten Spannung Vb 22 V oder kleiner ist.

4. Lichtsteuerungseinrichtung (1) umfassend:
eine Lichtsteuerungsplatte (10) nach einem der Ansprüche 1 bis 3; und
eine Treibereinheit (20), die eine an die Lichtsteuerungsplatte angelegte Treiberspannung steuert,
wobei die Treibereinheit
zwischen einem ersten Modus des Nicht-Anlegens der Treiberspannung, einem zweiten Modus des Anlegens einer Spannung, die gleich oder größer als die zweite Spannung Vb ist, und einem dritten Modus des Anlegens einer Spannung zwischen der ersten Spannung Va und der zweiten Spannung Vb umschaltet, sodass die Trübung der Lichtsteuerungsplatte die Trübung zwischen der Trübung in dem ersten Modus und der Trübung in dem zweiten Modus wird.

## Revendications

1. Feuille de contrôle de la lumière (10) comprenant :
une couche de contrôle de la lumière (11) qui contient une couche de résine (111) et des particules d'orientation ;
une paire de couches d'électrode transparentes (12a, 12b) qui prennent en sandwich la couche de contrôle de la lumière ; et
une paire de couches de support transparentes (13a, 13b) qui prennent en sandwich la couche de contrôle de la lumière et une paire de couches d'électrode transparentes, la couche de contrôle de la lumière ayant une structure dans laquelle les particules d'orientation sont contenues dans une pluralité de vides (116) dispersés dans la couche de résine, et contenant des cristaux liquides dispersés dans un polymère, ou des cristaux liquides en réseau polymère, ou des phases nématiques curvilignes alignées comme particules d'orientation,
**caractérisée en ce que**
des épaisseurs de la couche de contrôle de la lumière mesurées à une pluralité de positions de mesure sont comprises entre 0,8 fois ou plus et 1,2 fois ou moins une valeur médiane des épaisseurs,
dans laquelle
dans une courbe caractéristique obtenue par mesure d'une variation de haze lorsqu'une tension de commande appliquée aux couches d'électrode transparentes est modifiée, une première tension Va est une limite inférieure de la tension de commande dans une plage dans laquelle une valeur absolue d'un taux de variation du haze est de 0,5 %/V ou plus, une deuxième tension Vb est une limite supérieure de la tension de commande, et Vm est une valeur intermédiaire entre la première tension Va et la deuxième tension Vb, et
une variance {(Vmax - Vmin)/Vavr} x 100 de la valeur intermédiaire est de 40% ou moins, la variance étant obtenue par division d'une différence entre une valeur minimale Vmin et une valeur maximale Vmax parmi les valeurs moyennes Vm obtenues à partir des courbes caractéristiques à la pluralité de positions de mesure, par une valeur moyenne Vavr des valeurs intermédiaires Vm,
un diamètre du vide est de 0,4 µm ou plus et 2,2 µm ou moins.

2. Feuille de contrôle de la lumière selon la revendication 1, dans laquelle
la couche de contrôle de la lumière contient des entretoises qui contrôlent un espace entre une paire de couches d'électrode transparentes, et
un rapport entre une superficie totale occupée par une pluralité d'entretoises et une superficie totale de la couche de contrôle de la lumière lorsque la couche de contrôle de la lumière est observée depuis une surface de contact avec la couche d'électrode transparente est de 0,9 % ou plus et 30,0 % ou moins.

3. Feuille de contrôle de la lumière selon l'une quelconque des revendications 1 à 2,
dans laquelle une différence entre la première tension Va et la deuxième tension Vb est de 22 V ou moins.

4. Dispositif de contrôle de la lumière (1), comprenant :
une feuille de contrôle de la lumière (10) selon l'une quelconque des revendications 1 à 3 ; et
une unité de commande (20) qui contrôle une tension de commande appliquée à la feuille de contrôle de la lumière,
l'unité de commande
basculant entre un premier mode de non-application de la tension de commande, un deuxième mode d'application d'une tension égale ou supérieure à la deuxième tension Vb, et un troisième mode d'application d'une tension entre la première tension Va et la deuxième tension Vb, de sorte que le haze de la feuille de contrôle de la lumière devient le haze entre le haze dans le premier mode et le haze dans le deuxième mode.
